# EUROPEAN PATENT APPLICATION

(11) **EP 4 361 933 A1**
(43) Date of publication of application: **01.05.2024**
(21) Application number: 21947141.4
(22) Date of filing: 24.06.2021
(51) Int. Cl.: G06Q 30/08, G06Q 30/06

(54) **AUCTION MANAGEMENT SYSTEM PRESUMING TRANSFER FROM EXTERNAL SITE, AUCTION MANAGEMENT METHOD, AND PROGRAM**

(71) Applicant: Life Labo Co., Ltd., Tokyo 101-0047 (JP)
(72) Inventor: AKIKUSA Takashi, Tokyo 101-0047 (JP)
(74) Representative: Gille Hrabal Partnerschaftsgesellschaft mbB Patentanwälte
(86) International application number: PCT/JP2021/023948
(87) International publication number: WO 2022/269856

(57) **Abstract**

It relates to an auction management system, an auction management method, and a program. It enables smooth participation in auctions from posting activities such as product introductions before the intention to sell is formed on SNS as well as the simultaneous bidding by prospective users who have acquired reactions on SNS, net auctions, internet flea markets, and various shopping sites and the establishment of a penalty fee rule for the purpose of preventing mischievous bids, giving auction users a moderate gambling spirit and enabling them to use the system not only for convenience, but also for fun by a bidding fee rule to provide a game element.

## Description

### Technical Field

This disclosure relates to an auction management system, an auction management method, and a program for processing acquired information and holding auctions.

### Background Art

In social networking services (SNS), individuals or companies can introduce products to attract a wide range of reactions from other users (e.g., pressing a "like" button (a social button) as a communication software feature to indicate that the product content is liked, enjoyable, or supportive, or to be registered to a watchlist). In such case, users are more likely to judge a product that has attracted many reactions to be popular product and take purchase action.

Also, in net auctions, internet flea markets, and various shopping sites, products that have received a large number of "likes," "favorites," watchlist additions, and other reactions attract much attention.

Conventionally, a technology to link SNS and net auctions, for example, and to contain information on products that members want or favorite products that members own and are registered in an auction database, and when a product that a member wants is exhibited on an auction site, the member is notified of this fact, thereby encouraging them to bid for the product has been known (e.g., the technology described in Patent Literature 1).

### Citation List

### Patent Literature

[Patent Literature 1] JP2009-265745A

### Summary of the Invention

### Problems to be Solved by the Invention

The inventor of this application recognized the problem that when users move from SNS to purchasing activities, they must move from SNS to shopping sites, net auction sites, internet flea market sites, and the like and search for the relevant products to purchase or bid on in auctions, which requires complicated operations.

The inventor also recognized an issue that no bids are received or purchases made for a long period, even though the seller has received many reactions such as "likes" and watchlist registrations in net auctions and internet flea markets as an issue on the seller's side.

The inventor also recognized an issue on the side of the reprint source site that since some sellers simultaneously exhibit their items on multiple sites, sites that operate on the basis of charging by conclusion of contract must successfully conclude the selling successfully earlier than the other sites in order to earn revenue from the conclusion of contract.

The inventor also recognized the issue that information about the products that members want and the favorite products that they own must be registered in advance.

Therefore, the purpose of this disclosure is to enable smooth participation in auctions resulting from communication activities such as product introductions before the intention to sell is formed on SNS as well as to make each user enjoy using the auction by allowing simultaneous bidding by prospective users who have acquired reactions on SNS, net auctions, internet flea markets, and various shopping sites and creating a game element by allowing users to consume and transfer points.

### Means for Solving the Problems

An auction management system in an example of embodiments comprises an exhibit preparation information registration part that generates and registers an exhibit preparation information for an auction by receiving values of one or more reprint source items that includes post information posted by a user from a reprint source system and registering each of the values in predetermined reprint destination items; a reaction information registration part that receives and registers information on views or reactions collected for the post information as reaction information from the reprint source system; an exhibit instruction part that leads the user to confirm exhibit information and the user to instruct an exhibition by presenting an exhibit confirmation screen for the user to edit the registered exhibit preparation information together with additional exhibit information as the exhibit information in accordance with the exhibit instruction by the user; an auction execution part that generates an auction start screen based on the exhibit information confirmed and executes the auction; and an exhibit information simultaneous distribution part that simultaneously distributes the exhibit information together with a link to access the auction start screen for simultaneous bidding to a group of users identified by the reaction information registered after the auction start screen is generated.

### Effect of the Invention

According to this disclosure, users can smoothly participate in auctions from communication activities such as product introductions before the intention to sell is formed on SNS, and potential users whose reactions have been acquired on SNS, net auctions, internet flea markets, and various shopping sites can bid simultaneously. Moreover, it is expected that the reprint destination site will be able to facilitate the collection of exhibits if it can reach an agreement of cooperation with the reprint source.

### Brief Description of Drawings

[Fig. 1] A functional block diagram of an embodiment of the auction management system.
[Fig. 2] An example of the hardware configuration of an embodiment of the auction management system.
[Fig. 3] A flowchart showing an example of the main process of an embodiment of the auction management system.
[Fig. 4A] An example of a screen (post information) of an embodiment of the auction management system.
[Fig. 4B] An example of a screen (exhibit information) of an embodiment of the auction management system.
[Fig. 5A] An example of a screen (start screen) of an embodiment of the auction management system.
[Fig. 5B] An example of a screen (message) of an embodiment of the auction management system.
[Fig. 6A] An example of a screen (bidding screen) of an embodiment of the auction management system.
[Fig. 6B] An example of a screen (opening bid page) of an embodiment of the auction management system.
[Fig. 7A] An example of a screen (procedural instruction screen) of an embodiment of the auction management system.
[Fig. 7B] An example of a screen (processing screen) of an embodiment of the auction management system.

### Modes for Carrying Out the Invention

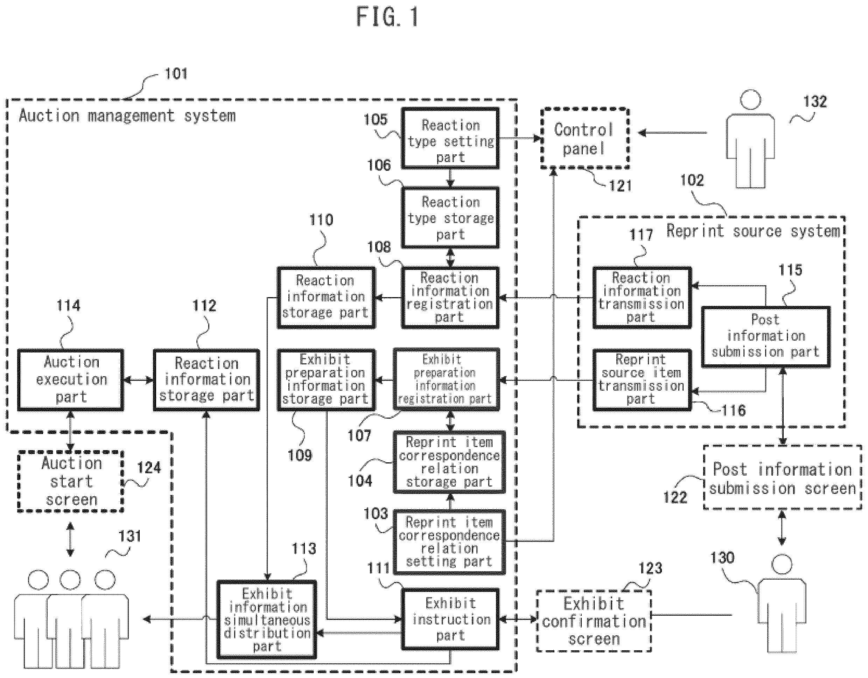

The following is a detailed description of the present embodiment with reference to the drawings. Fig. 1 is a functional block diagram of an embodiment of the auction management system that processes acquired information and holds an auction. The present embodiment discloses an auction management system, an auction management method, a program, and a storage device in which the program is stored.

In the present embodiment, for example, when a user 130 using the SNS site posts information from the post information submission screen 122 to the SNS site for communication before the intention to sell is formed at a reprint source system 102 that operates an SNS site, reprint information based on the post information is automatically sent to the auction management system 101 which is linked in advance to the reprint source system 102, and automatically registered as the exhibit preparation information for the case of the user exhibiting the item at the auction.

Then, regarding the post information, at the SNS site, reactions can be gathered by pressing the "Like" buttons on the product content listed on the post information or adding it to a watchlist. For example, the user 130 presses the "Exhibit" button displayed on the post information submission screen 122 of the SNS site when they have formed the intention to exhibit for auction because it is so popular.

At this time, browsing data such as the watchlist and the like or reaction data, including the "Like" buttons and the like (hereinafter referred to as "reaction data, and the like"), are automatically transmitted to the auction management system 101 and registered as reaction information.

When the user 130, for example, presses the auction button described above, the exhibit preparation information, which has been automatically reprinted in the auction management system 101, is immediately presented on the exhibit confirmation screen 123 together with additional exhibit information for the user to select the auction rules and the like. User 130 can promptly instruct the auction management system 101 to exhibit by editing, modifying, or selecting the exhibit preparation information and the additional exhibit information as appropriate.

In the auction management system 101, the auction start screen is generated based on the auction information confirmed by the user 130, and the auction is ready to start.

Along with this, the auction management system 101 simultaneously distributes the exhibit information together with a link to access the aforementioned auction start screen for simultaneous bidding to a group of users identified by the reaction information that is automatically registered. The auction start screen can only be opened from the link in this message that is simultaneously distributed.

Thus, the present embodiment can generate the exhibit information based on the post information posted by the user before the user has formed the intention to sell immediately after the user has the intention to sell, allowing the user to sell at auction in a short period of time.

Moreover, since bids for auctions become simultaneous bidding (simultaneous input) by a specific group of user(s) 131 based on reaction information instead of by an unspecified large number, auctions with a high probability of winning can be realized.

The reprint source system 102 may be, for example, a major net auction site or an online flea market site.

In this case, as in the case of SNS sites, reprint information and reaction data and the like, based on post information of auctions and the like posted on these sites are automatically transmitted to the auction management system 101 and registered as exhibit information and reaction information.

The user 130 is able to exhibit on the auction management system 101 as in the case of the SNS sites when a large amount of reaction data and the like was obtained.

In this case, as in the case of SNS sites, since bids for auctions at the auction management system 101 become simultaneous bidding (simultaneous input) by a specific group of user(s) 131 based on reaction information instead of by an unspecified large number, auctions with a high probability of winning can be realized.

In Fig. 1, the auction management system 101 has a transfer item correspondence relation setting part 103, a transfer item correspondence relation storage part 104, a reaction type setting part 105, a reaction type storage part 106, an exhibit preparation information registration part 107, a reaction information registration part 108, an exhibit preparation information storage part 109, a reaction information storage part 110, an exhibit instruction part 111, an auction information storage part 112, an exhibit information simultaneous distribution part 113, and an auction execution part 114.

In Fig. 1, the reprint source system 102 has a post information submission part 115, a reprint source item transmission part 116, and a reaction information transmission part 117.

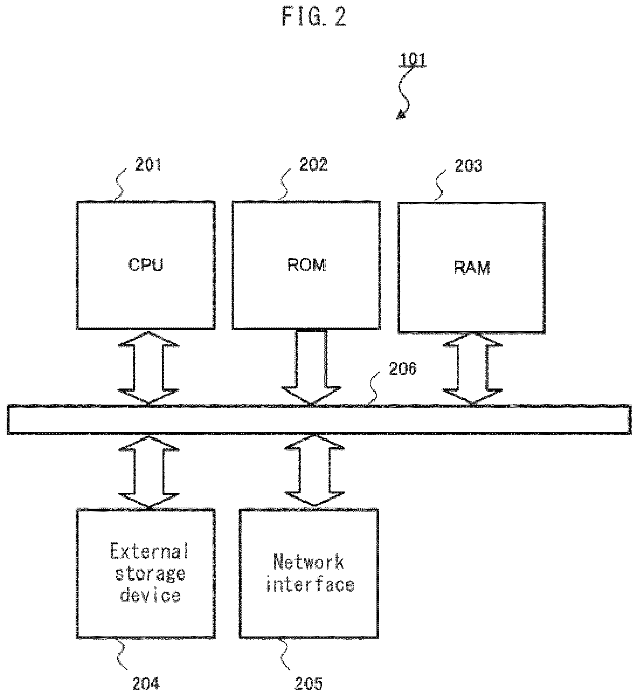

Fig. 2 is a drawing that shows an example of the hardware configuration of an embodiment of the auction management system 101. In Fig. 2, the auction management system 101 may be configured as a general server computer system. The auction management system 101 has a configuration such that a CPU (central processing unit) 201, ROM (read-only memory) 202, RAM (random access memory) 203, external storage device 204, and network interface 205 are interconnected by a system bus 206.

The external storage device 204 functions as the transfer item correspondence relation storage part 104, the reaction type storage part 106, the exhibit preparation information storage part 109, the reaction information storage part 110, and the auction information storage part 112 in Fig. 1.

The transfer item correspondence setting part 103, the reaction type setting part 105, the exhibit preparation information registration part 107, the reaction information registration part 108, the exhibit instruction part 111, the exhibit information simultaneous distribution part 113, and the auction execution part 114 in Fig. 1 are functional sections in which CPU 201 executes the control program loaded from ROM 202 or external storage device 204 to RAM 203. The program executed by the CPU 201 is non-transient.

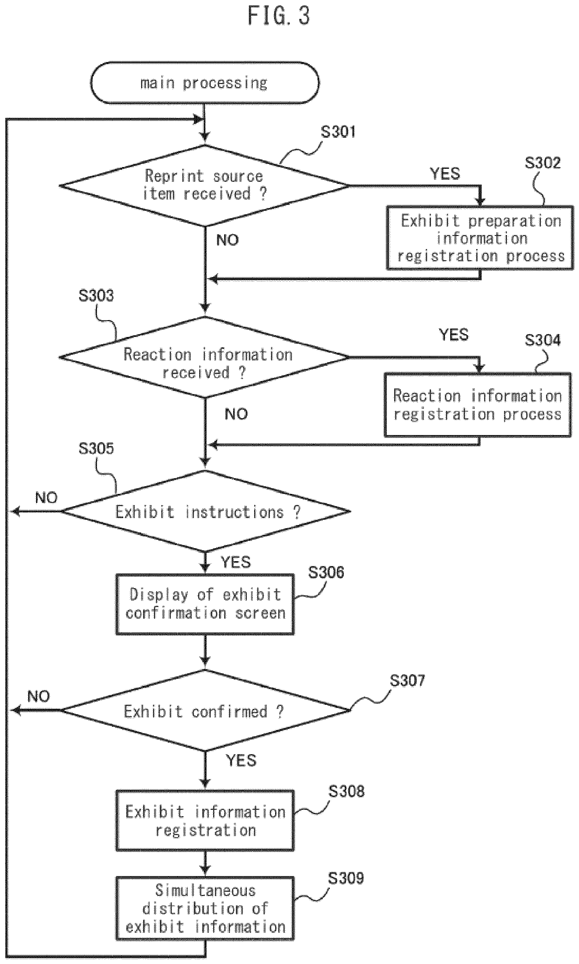

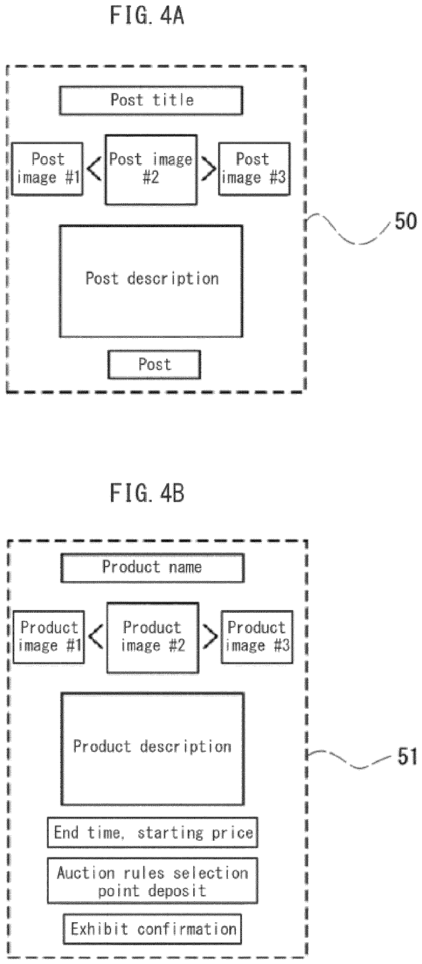

Fig. 3 is a flowchart illustrating an example of the main process of an embodiment of the auction management system. This main process is executed by CPU 201, which loads the control program stored in ROM 202 or external storage device 204 into RAM 203. The operation of each part of the auction management system 101 in Fig. 1 is described using the hardware configuration in Fig. 2, the flowchart in Fig. 3, and screen examples shown in Fig. 4 through Fig. 7, as appropriate.

First, although not shown as a flowchart, the transfer item correspondence relation setting part 103 and reaction type setting part 105 of the auction management system 101 in Fig. 1 provide a control panel 121 to, for example, an administrator user 132 of the reprint source system 102.

The CPU 201 in Fig. 2 causes, for example, a browser on the above management PC, to display the control panel 121 via the network interface 205 by the administrator user 132, for example, accessing a specific URL of the auction management system 101 from a management PC (personal computer) connected to the Internet.

This allows the administrator user 132 to set up on the control panel 121 a correspondence relationship indicating which reprint source item of the post information in the reprint source system 102 is to be reprinted to which reprint destination item in the auction management system 101 that constitutes the exhibit preparation information.

For example, the administrator user 132 maps the post title, which is the reprint source item contained in the post information 50 that is illustrated in Fig. 4A, to the product name, which is the reprint destination item contained in the post information 50 that is exemplified in Fig. 4A. The administrator user 132 maps the post description, which is the reprint source item contained in the post information 50 in Fig. 4A, to the product description, which is the reprint destination item contained in the exhibit information 51 in Fig. 4B. The administrator user 132 maps the post images #1 to #3, which are the reprint source items contained in the post information 50 in Fig. 4A, to the product images #1 to #3, which are the reprint destination items contained in the exhibit information 51 in Fig. 4B.

The administrator user 132 also specifies which reaction type regarding the post information of the reprint source system 102 is to be sent to the auction management system 101 on the control panel 121.

For example, the administrator user 132 sets up the transmission of the watchlist and "like" user IDs regarding the post information of the reprint source system 102 to the auction management system 101.

When the administrator user 132 completes the settings on the control panel 121, the transfer item correspondence relation setting part 103 of the auction management system 101 stores the transfer item correspondence relation specified in the control panel 121 in the transfer item correspondence relation storage part 104. The reaction type setting part 105 of the auction management system 101 stores the reaction type specified in the control panel 121 in the reaction type storage part 106.

The CPU 201 in Fig. 2 then starts executing the control program corresponding to the main process illustrated in the flowchart in Fig. 3.

First of all, the CPU 201 determines whether the reprint source item has been received from the reprint source system 102 (step S301). In Fig. 1, the reprint source system 102 transmits to the auction management system 101 the value of the reprint source item corresponding to the aforementioned transfer item correspondence relation in the post information obtained at the post information submission part 115 by the function of the reprint source item transmission part 116, which is realized by executing a control program not specifically shown in the drawings.

When the decision in step S301 becomes YES, the CPU 201 executes an exhibit preparation information registration process (step S302). In this process, the CPU 201 generates exhibit preparation information for an auction and stores the exhibit preparation information in the exhibit preparation information storage part 109 by receiving values of one or more reprint source items constituting the post information posted by the user 130 in Fig. 1 from the reprint source system and registering them in the reprint destination item determined by the transfer item correspondence relation stored in the transfer item correspondence relation storage part 104. The exhibit preparation information registration process in step S302 realizes the function of the exhibit preparation information registration part 107 of Fig. 1.

When the decision of step S301 is NO or after processing step S302, the CPU 201 determines whether or not reaction information has been received from the reprint source system 102 (step S303). In Fig. 1, the reprint source system 102, by the function of the reaction information transmission part 117, which is realized by executing a control program not specifically shown in the drawings, transmits values of the reaction type specified by the administrator user 132 from the reaction data and the like collected in relation to the post information obtained by the post information submission part 115 to the auction management system 101.

When the decision in step S303 is YES, the CPU 201 executes a reaction information registration process (step S304). In this process, the CPU 201 receives the aforementioned reaction information from the reprint source system 102 and stores it in the reaction information storage part 110. This process realizes the function of the reaction information registration part 108 in Fig. 1.

When the decision of step S303 is NO, or after the processing of step S304, the CPU 201 determines whether the user 130 has made an exhibit instruction by, for example, accessing a specific URL of the auction management system 101 from a terminal such as a smartphone, tablet terminal, or PC that can connect to the Internet (step S305).

When the decision in step S305 is YES, the CPU 201 executes the exhibit confirmation screen display process (step S306). In this process, the CPU 201 causes the exhibit confirmation screen 123 to be displayed on, for example, a browser of the terminal of the user 130 described above via the network interface 205. The exhibit confirmation screen 123 is a screen that allows the user to edit the exhibit preparation information stored in the exhibit preparation information storage part 109 as exhibit information together with additional exhibit information.

The exhibit confirmation screen 123 displayed on the terminal of the user 130 by the process of step S306 has the format illustrated in Fig. 4B. Using this exhibit confirmation screen 123, the user 130, for example, edits or inputs the "product name," "product description," "product image," and "end time, starting price," as illustrated in Fig. 4B, making the "auction rule selection" or making the "point deposit" (to be described later). Finally, the user confirms the exhibit information by clicking the "Confirm Exhibit" button.

After step S306, the CPU 201 determines whether the user 130 has finalized the exhibit information (step S307).

If the decision in step S307 is YES, the CPU 201 stores the finalized exhibit information in the auction information storage part 112 in Fig. 1 (step S308).

The aforementioned steps from S306 to S307 realize the function of the exhibit instruction part 111 in Fig. 1.

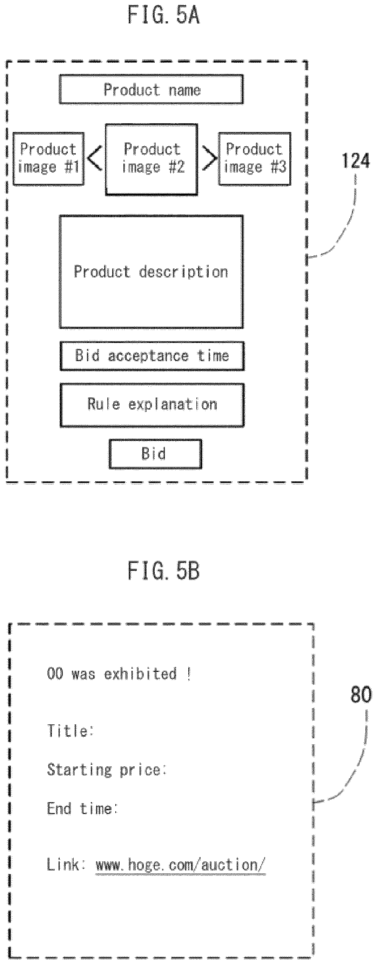

As a result of the process in step S308, the CPU 201 generates and outputs the auction start screen 124, triggered by the storage of new item information in the auction information storage part 112 of Fig. 1, which is not shown as a flowchart, so that the auction can start. Fig. 5A illustrates an example of the auction start screen 124. The "Bid" button is displayed in addition to item information such as the product name, product description, product image, bid acceptance time, and rule description. This process realizes the function of the auction execution part 114 in Fig. 1.

Following step S308, the CPU 201 simultaneously distributes the aforementioned exhibit information finalized together with a link to access the auction start screen 124 for simultaneous bidding to a group of user(s) 131 identified by the reaction information registered in the reaction information storage part 110 by email, an application notification, and the like, after the auction start screen 124 has been generated (Step S309). Fig. 5B shows an example of this message 80 that is simultaneously distributed. The message 80 displays a link to access the auction start screen 124, along with an exhibit information such as the title, start price, end time, and other information. The auction start screen 124 is set so that it cannot be searched from Internet search sites. That is, only a specific group of user(s) 131 registered as reaction data, etc. is able to access this auction start screen 124. This process of step S309 realizes the function of the exhibit information simultaneous distribution part 113 in Fig. 1.

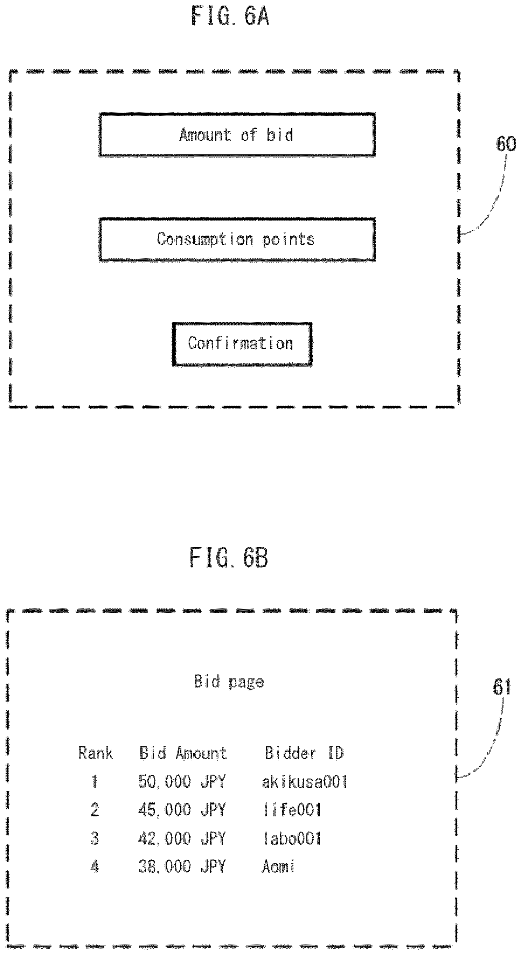

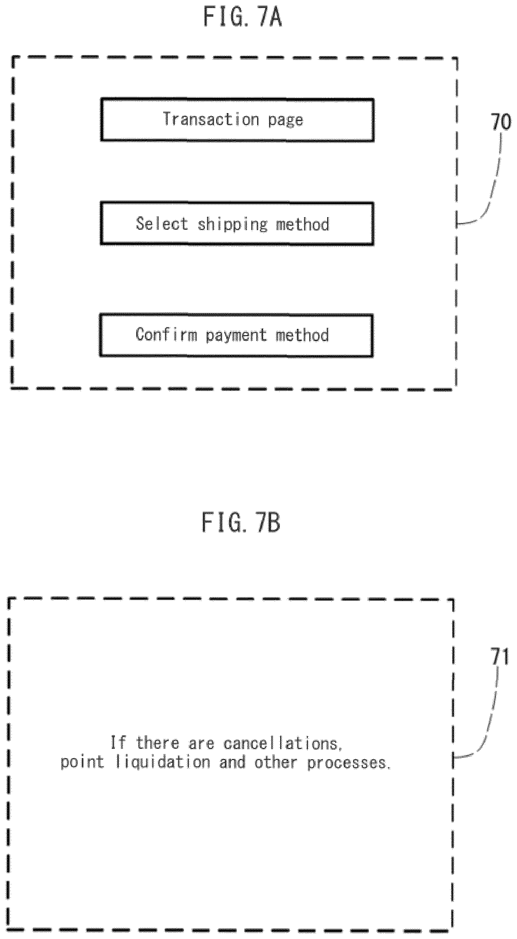

Then, in the bidding scene, the bidding screen 60 illustrated in Fig. 6A and the bid opening page 61 illustrated in Fig. 6B are provided to the group of user(s) 131 by the function of the auction execution part 114 of Fig. 1 by the CPU 201. After a successful bid is submitted, a procedure instruction screen 70 illustrated in Fig. 7A and a processing screen 71 displaying "Point Settlement and Other Processes in the Event of Cancellation" in Fig. 7B are provided to the group of user(s) 131. The procedure instruction screen 70 displays buttons such as "Transaction Page," "Select Shipping Method," "Confirm Payment Method," and the like.

In the flowchart in Fig. 3, when the decision in step S305 is NO or when the decision in step S307 is NO (e.g., when the user 130 presses the cancel button, which is not specifically illustrated in the exhibit confirmation screen 123), the CPU 201 returns to the processing in step S301 and repeatedly executes processes similar to aforementioned ones.

In the embodiment described above, the additional exhibit information displayed on the exhibit confirmation screen 123 may include information that allows the user 130 to select the rules of the auction.

This rules of auction may have, for example, that is a forfeit-type rule that is as follows: The user 130 deposits points on the exhibit confirmation screen 123 as an exhibitor; the points are deposited when the group of user(s) 131 performs a simultaneous bidding; data of the points deposited are stored with bidding information in the auction information storage part 112; the points are returned to the group of user(s) 131 who have not canceled when a cancellation occurs after the auction results; the points stored are restored when no cancellations have occurred after the auction results; and bidders other than a successful bidder of the auction will receive the returned points immediately after an opening of the bidding.

The aforementioned rules of the auction may have, a bidding fee consumption type-rule that is as follows: The user 130, who is a seller, is not burdened with points; the group of user(s) 131, who bid simultaneously, bear points corresponding to the bidding fee determined by the user 130. who is the seller, on the exhibit confirmation screen 123; the points incurred by the group of user(s) 131, who bid simultaneously, are not refunded; and the user 130, who is the seller, gets points for an amount corresponding to the bidding fee incurred by the user for the simultaneous bidding, or they may be used in conjunction with the forfeit-type rule.

The auction rules described above may be bid-rank-controlled rules, where the bidder with the rank determined by the user 130, who is the seller, on the exhibit confirmation screen 123 becomes the winning bidder, or they may be used in conjunction with the forfeit-type rule.

As described above, the aforementioned additional exhibit information may include information that causes a user who is the seller to purchase or consume points at the start of the auction.

### DESCRIPTION OF THE REFERENCE NUMERALS

- 101: Auction management system
- 102: Reprint source system
- 103: Transfer item correspondence relation setting part
- 104: Transfer item correspondence relation storage part
- 105: Reaction type setting part
- 106: Reaction type storage part
- 107: Exhibit preparation information registration part
- 108: Reaction information registration part
- 109: Exhibit preparation information storage part
- 110: Reaction information storage part
- 111: Exhibit instruction part
- 112: Auction information storage part
- 113: Exhibit information simultaneous distribution part
- 114: Auction execution part
- 115: Post information submission part
- 116: Reprint source item transmission part
- 117: Reaction information transmission part
- 121: Control panel
- 122: Post information submission screen
- 123: Exhibit confirmation screen
- 124: Auction start screen
- 201: CPU
- 202: ROM
- 203: RAM
- 204: External storage device
- 205: Network interface
- 206: System bus

## Claims

1. An auction management system that processes information and holds an auction, **characterized in that** the auction management system comprises:
an exhibit preparation information registration part that generates and registers an exhibit preparation information for an auction by receiving values of one or more reprint source items comprising post information posted by a user from a reprint source system and registering each of the values in predetermined reprint destination items;
a reaction information registration part that receives and registers information on views or reactions collected for the post information as reaction information from the reprint source system;
an exhibit instruction part that leads the user to confirm exhibit information and the user to instruct an exhibition by presenting an exhibit confirmation screen for the user to edit the registered exhibit preparation information together with additional exhibit information as the exhibit information in accordance with the exhibit instruction by the user;
an auction execution part that generates an auction start screen based on the exhibit information confirmed and executes the auction; and
an exhibit information simultaneous distribution part that simultaneously distributes the exhibit information together with a link to access the auction start screen for simultaneous bidding among a group of user(s) identified by the reaction information registered after the auction start screen is generated.

2. The auction management system according to claim 1, **characterized in that** the additional exhibit information includes information for the user to select the auction rules.

3. The auction management system according to claim 2, **characterized in that** the auction rules include a forfeit-type rule; that is,
the user deposits points on the exhibit confirmation screen as an exhibitor;
the points are deposited when the group of user(s) performs a simultaneous input;
data of the points deposited are stored with bidding information;
the points are returned to the group of user(s) who have not canceled when a cancellation occurs after the auction results;
the points stored are restored when no cancellations have occurred after the auction results; and
bidders other than a successful bidder of the auction will receive the points, which are returned immediately after an opening of the bidding.

4. The auction management system according to claims 2 or 3, **characterized in that** the auction rules include a bidding fee consumption-type rule; that is,
the user who is a seller is not burdened with points;
the group of user(s) who bid simultaneously bear points corresponding to the bidding fee determined by the user who is the seller on the exhibit confirmation screen;
the points incurred by the group of user(s) who bid simultaneously are not refunded; and
the user who is the seller gets points for an amount corresponding to the bidding fee incurred by the user for the simultaneous bidding.

5. The auction management system according to claims 1 or 2, **characterized in that** the additional exhibit information includes information that causes the user who is the seller to purchase or consume points at the start of the auction.

6. An auction management method that is executed by an auction management system that processes information and holds an auction, **characterized in that**
the auction management system executes:
a process of generating and registering exhibit preparation information for an auction by receiving values of one or more reprint source items comprising post information posted by a user from a reprint source system and registering each of the values in predetermined reprint destination items;
a process of receiving information on views or reactions collected for the post information as reaction information from the reprint source system and registering the information;
a process of leading the user to confirm the exhibit information and to instruct exhibition by presenting an exhibit confirmation screen for the user to edit the registered exhibit preparation information together with an additional exhibit information as exhibit information in accordance with an exhibit instruction by the user;
a process of generating an auction start screen based on the confirmed exhibit information and executing the auction; and
a process of simultaneous distributing the exhibit information together with a link to access the auction start screen for simultaneous bidding among a group of user(s) identified by the registered reaction information after the auction start screen is generated.

7. A program to be executed by a computer that processes information and holds an auction, **characterized in that**:
the program makes the computer execute:
a process of generating and registering exhibit preparation information for an auction by receiving values of one or more reprint source items comprising post information posted by a user from a reprint source system and registering each of the values in predetermined reprint destination items;
a process of receiving and registering information on views or reactions collected for the post information as reaction information from the reprint source system;
a process of causing the user to confirm the exhibit information and the user to instruct an exhibition by presenting an exhibit confirmation screen for the user to edit the registered exhibit preparation information together with additional exhibit information as exhibit information in accordance with an exhibit instruction by the user;
a process of generating an auction start screen based on the confirmed exhibit information and causing the auction to be executed; and
a process of simultaneously distributing the exhibit information together with a link to access the auction start screen for simultaneous bidding among a group of user(s) identified by the registered reaction information after the auction start screen is generated.
